Europäisches Patentamt

European Patent Office

Office européen des brevets

(11) Publication number: **0 193 152**

A2

(12) # EUROPEAN PATENT APPLICATION

(21) Application number: 86102360.4

(22) Date of filing: 24.02.86

(51) Int. Cl.⁴: **G 01 N 21/21**
**D 06 F 39/00**

(30) Priority: 28.02.85 IT 4570885

(43) Date of publication of application:
03.09.86 Bulletin 86/36

(84) Designated Contracting States:
AT BE CH DE FR GB IT LI LU NL SE

(71) Applicant: ZELTRON ISTITUTO ZANUSSI PER
L'ELETTRONICA S.P.A.
Via Principe di Udine, 66
I-33030 Campoformido Udine(IT)

(72) Inventor: Boscolo, Antonio
Via Angelo Emo 33/2
I-34144 Trieste(IT)

(72) Inventor: Stibelli, Sergio
Via della Liburnia 11
I-34100 Trieste(IT)

(74) Representative: Patentanwälte Grünecker, Kinkeldey,
Stockmair & Partner
Maximilianstrasse 58
D-8000 München 22(DE)

(54) Apparatus for monitoring a washing solution containing surfactants.

(57) The apparatus comprises a source of linearly polarized light to be propagated through the washing solution and to be diffuced by the micelles and the emulsion.

Photodiodes receive the diffused light through respective analyzers oriented with their polarization directions parallel to the polarization direction of the primary light, and perpendicularly thereto, respectively. The apparatus determines the condition of the washing solution at the microscopic level by the use of variations of the polarization of the radiation diffused by the micelles and by the emulsion.

FIG. 2

EP 0 193 152 A2

Croydon Printing Company Ltd.

## Description

The present invention relates to apparatus for monitoring a washing solution containing surfactants on the base of the diffusion of a light beam directed through said solution, to be employed for instance in automatic laundry washing machines.

As generally known, modern laundry washing machines are provided with electronic control system for controlling the operation of the machine in accordance with a number of operating parameters such as the amount of laundry, the type and amount of dirt in the laundry to be laundered, the temperature and level of the washing solution, the duration of the laundering and rinsing operations etc..

The knowledge of these parameters notwithstanding, it is still difficult to effectively determine the degree of cleanliness of the laundry during the washing process, it being in fact impossible to directly determine this degree during the progress of the washing cycle, were it only for the reason that individual pieces in a charge of laundry may contain various types and amount of dirt.

In some cases, as described for instance in British Patent 1,258,839 and in French Patent Application Nr. 2,485,576, the degree of cleanliness is indirectly determined by monitoring the turbidity of the washing solution and/or of the rinsing liquid by means of optical devices such as photosensitive elements and light-emitting diodes. This method consists in directing a light beam through the aquaeous solution for determining the transparency thereof.

The degree of transparency of the laundering bath and/or of the rinsing liquid is scarcely indicative, however, of the actual removal of dirt from the goods to be laundered.

In this context it is to be remembered that, while solid

0193152

particles of inorganic dirt are easily removed as for instance by mechanical agitation of the laundry alone, the removal of organic substances, particularly fatty ones, impregnating the laundry is considerably more difficult.

On the other hand, none of the other known devices, adapted for instance to measure the electric conductivity, the hardness and/or the acidity of a laundering bath, are capable of determining the actual removal of dirt from the goods to be laundered.

Even the surface tension, although it is indicative to a certain degree of the detergent effect of the surfactant substances contained in the detergents introduced into the laundering bath, does not either represent a clear-cut information. This is because the surface tension may be influenced by other variables such as the water hardness and temperature.

It would thus be desirable, and it is an object of the invention to provide a device for monitoring a washing solution containing surfactant substances and capable of determining the actual degree of dirtiness of the goods being laundered in the solution.

According to the invention, this object is attained by apparatus for monitoring a washing solution containing surfactant substances in the form of micelles and/or emulsion, which is mainly characterized by comprising sensing means for sensing microscopic characteristics of said micelles and said emulsion in said solution and adapted to generate signals corresponding to such characteristics.

Only by monitoring the solution on a microscopic level it is in fact possible to correctly determine the degree of dirt removal from the goods being laundered in the solution.

The described apparatus preferably is of the type comprising a source of linearly polarized light to be propagated through the washing solution and adapted to be diffused by the micelles and the emulsion. According to another aspect of the invention, the sensing means in this case comprise a first and a second photosensitive element adapted to receive the diffused light through associated optical analyzers oriented with their respective directions of polarization parallel and perpendicular, respectively, to the direction of polarization of the light emitted by the source.

The characteristics and advantages of the invention will become more clearly evident from the following description, given by way of example with reference to the accompanying drawings, wherein:

fig. 1 to 4 show diagrammatic illustrations, on a microscopic scale, of successive phases in the removal of dirt from an article immersed in the monitored solution,

fig. 5 shows a diagrammatic illustration of monitoring apparatus according to a preferred embodiment of the invention, and

fig. 6 shows a graphic representation, in perspective, of the optical diffusion and polarization phenomena occurring in the apparatus of fig. 5.

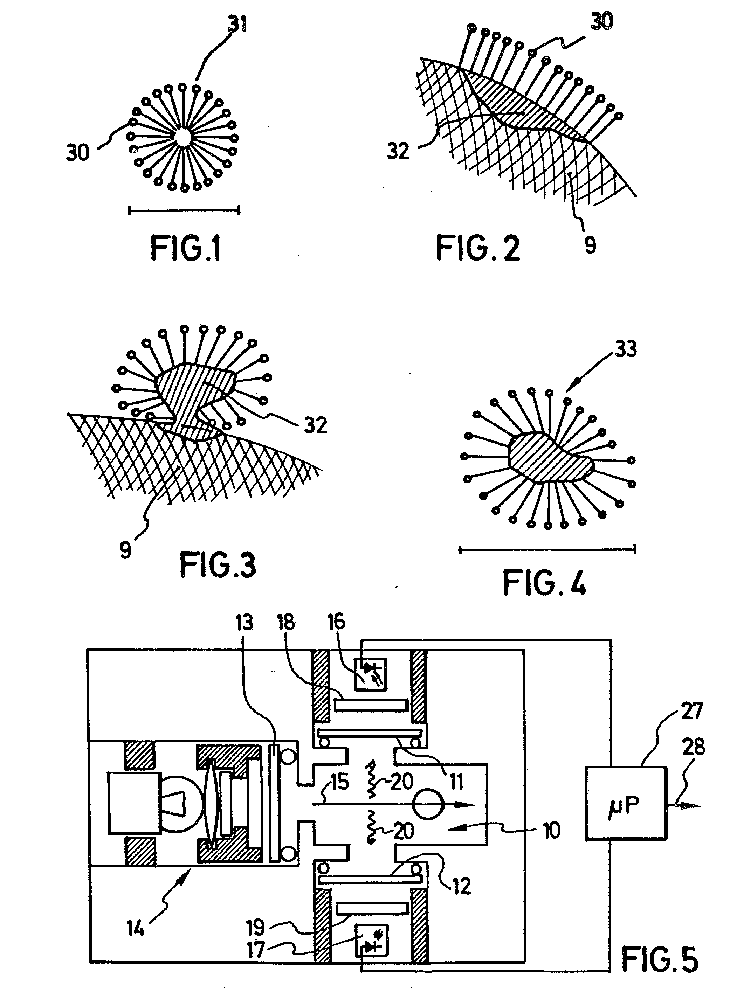

With reference to figs. 1 to 4, the present invention is based on the recognition that the removal of dirt 32 (in particular fatty organic substances) from an object 9 (for example a fabric) being laundered in an aquaeous detergent solution is essentially brought about by the absorption of surfactant substances (usually contained in many detergents) by the dirt substances, resulting in the deminishing of the surface tension between the dirt substance and the water. The actual removal of the dirt may then be assisted by mechanical action or by the effects of temperature, as is the case for instance in domestic laundry washing machines.

In particular, it is noticed - on the microscopic level - that the surfactant substance present in the solution is normally in the form of hydrocarbon chains 30 agglomerated in the shape of micelles 31 having an apolar hydrophobic end (usually formed by a $-CH_3$ group) and a polar hydrophilic end (for example of the type $-COOH^-$ or $-SO_3Na^+$).

Under certain conditions of concentration and temperature, the surfactant molecules 30, initially agglomerated in the form of free micelles 31 (fig. 1), are united at their hydrophobic tails with the fatty dirt 32 on the article 9 (fig. 2), promoting its becoming detached (fig. 3) and emulsified (fig. 4).

The micelles 31 usually are of substantially spherical shape, with a diameter in the order of 50 $\overset{o}{A}$; in particular, they show an isotropic behaviour, that is, they diffuse an incident beam of polarized light in all directions, the diffused radiation maintaining the same direction of polarization as the incident radiation.

The process of the solubilization of the fatty substances 32 (fig. 3) and of the subsequent emulsification (fig. 4) results in a considerable increase of the dimensions of the micelles 31, the shape of which may become spherical, elliptical or cylindrical. Under these conditions, the particles 33 of the emulsion assume anisotropic characteristics in the presence of an incident beam of polarized light, which is thereby diffused and partially depolarized, accompanied by a change of intensity.

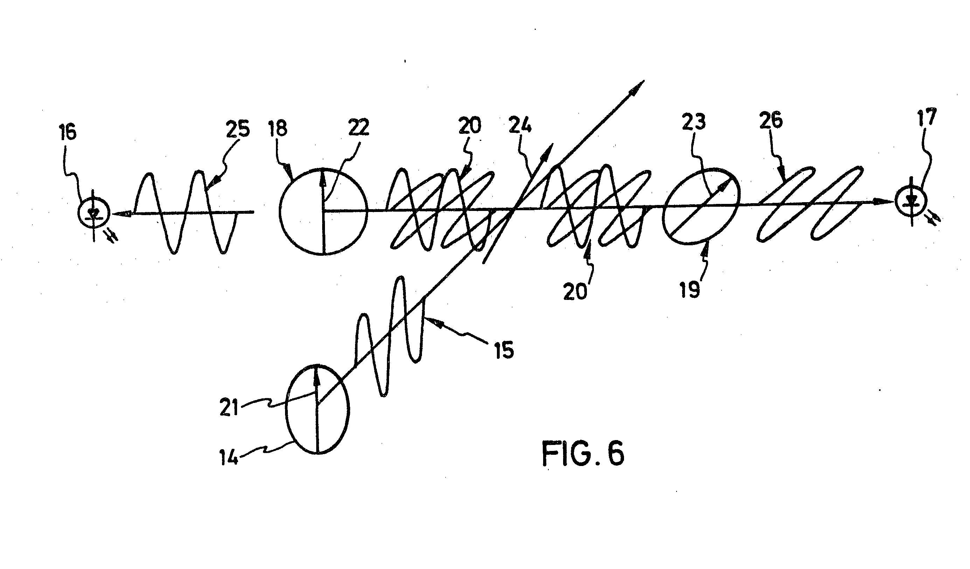

Keeping these considerations in mind, the monitoring apparatus according to the invention is preferably designed as shown in fig. 6 and comprises a chamber 10 made of a chemically inert material (such as polytetrafluoro ethylene) having a low thermal expansion coefficient.

Chamber 10 is adapted to contain at least part of the washing solution to be monitored and is provided with transparent windows 11, 12 and 13 secured thereto in a sealing manner.

Disposed behind window 13 is an optical group 14 acting as a source of linearly polarized light and including, among others, a collimator lens, a thermal protection filter, and at least one polarizing filter.

The light emitted by source 14 is directed into chamber 10 and through the washing solution contained therein in the direction indicated by an arrow 15.

Outside of windows 11 and 12, which are preferably located in the proximity of window 13 for avoiding multiple diffusion phenomena, there are disposed respective photosensitive elements 16 and 17 at lateral positions with respect to the direction of propagation of the light 15.

Elements 16 and 17, preferably in the form of respective photodiodes with associated amplifyers, are adapted to receive, through respective optical analyzers 18, 19 (polarizators), the light diffused by the micelles and by the emulsion (not shown in fig. 5) present in the washing solution, the diffused light being indicated by arrows 20.

Optical analyzers 18 and 19 are preferably in the form of Nicol prisms which are, as generally known, characterized by having a predetermined polarization direction.

According to one aspect of the invention, analyzer 18 is oriented with its polarization direction parallel to the polarization direction of the light emitted by source 14, while analyzer 19 is oriented with its polarization direction perpendicular to that of the "primary" light 15.

These optical characteristics are more clearly evident from fig. 6, in which the vector 21 indicates the polarization direction of the primary light 15, while the vectors 22 and 23 indicate the respective polarization directions of analyzers 18 and 19. In fig. 6 the primary light and the diffused depolarized light 20 are represented by respective sinus curves at varying orientations.

The primary light 15 is diffused by the micelles and/or the emulsion (the dimensions and shapes of which are symbolically represented as the median value of the vector 24), and is then again polarized by analyzers 18, 19 according to their respective polarization directions 22 and 23, so that respective components of polarized light 25, 26 are sensed by photodiodes 16 and 17. It is noted that, as the primary light 15 is linearly polarized, the characteristics of the light diffused by the micelles and by the emulsion depend exclusively on the dimensions and shapes of the diffusing particles 24.

The apparatus according to the invention thus permits the microscopic characteristics of the washing solution to be monitored to be determined by making use of the variations of the state of polarization of the radiation diffused by the micelles and the emulsion 24.

It may thus in fact be readily shown that the intensity of the light 25, 26 passing through the respective parallel analyzer 18 ($I_{25}$) and through the perpendicular analyzer 19 ($I_{26}$) may be represented by the following expressions:

(a) $I_{25} = \alpha_1 \cdot C_m + \beta_1 \cdot C_e;$

(b) $I_{26} = \alpha_2 \cdot C_m + \beta_2 \cdot C_e,$

wherein $\alpha_1$, $\alpha_2$, $\beta_1$, $\beta_2$ are factors representing the structure of the micelles and of the emulsion, while $C_m$ and $C_e$ represent the concentration of the micelles and of the emulsion.

In a per se known manner, photodiodes 16 and 17 are adapted to produce signals proportional to the intensity of the respective light $I_{25}$ and $I_{26}$, said signals being applied to a microprocessor adapted to establish the ratio R:

(c) $R = \dfrac{I_{25}}{I_{26}} = \dfrac{\alpha_1 \cdot C_m + \beta_1 \cdot C_e}{\alpha_2 \cdot C_m + \beta_2 \cdot C_e}$

The microprocessor is indicated at 27 in fig. 5 and may for instance be of the type 8080 sold by Intel Corporation.

Microprocessor 27 (at an output of which the appears a signal representative of the above defined ratio R) may be incorporated in a programmable control unit of a laundry washing machine of the type described in a co-pending patent application by the present applicant.

When the washing solution to be monitored contains micelles 31 substantially in the absence of emulsion (fig.1), it has been found experimentally that analyzer 18 transmits substantially all of the diffused light 20 by polarizing it, while analyzer 19 practically blacks out all of this light (fig. 6). This represents thus the condition:

(a.1) $I_{25} = \alpha_1 \cdot C_m$;

(b.1) $I_{26} = \alpha_2 \cdot C_m \approx 0$;

(c.1) $R = \dfrac{\alpha_1}{\alpha_2} \geqslant 70$.

The presence of micelles alone in the washing solution is thus indicated by a low value of $I_{25}$ and an elevated ratio R.

As the washing solution successively absorbs dirt 37 (figs. 2 and 3), the values of the parameters $I_{25}$, $I_{26}$ and R vary, until a condition is attained (fig. 4), in which all of the surfactant is exhausted and an emulsion has been formed. Under these conditions there is an increase of the intensity of the light 25 transmitted by analyzer 18 (fig. 6), and a still higher increase of the intensity of the light 26 transmitted by analyzer 19.

Under these conditions, the factor $\alpha_2$ may be neglected, resulting in the following conditions:

(a.2) $I_{25} = \alpha_1 \cdot C_m + \beta_1 \cdot C_e$;

(b.2) $I_{26} = \beta_2 \cdot C_e$;

$$(c.2) \quad R = \frac{\alpha_1 \cdot C_m + \beta_1 \cdot Ce}{\beta_2 \cdot Ce} - \frac{\beta_1}{\beta_2}.$$

The exhaustion of the micelles is thus indicated by a substantial increase of the values $I_{25}$ and $I_{26}$, with a substantial reduction of the ratio R, which has been experimentally found to be reduced to about 10.

When the values of $I_{25}$, $I_{26}$ and R remain constant for a certain period of time, this may be indicative of one of two conditions:

a) the surfactant is exhausted, but there is still dirt to be removed;

b) the dirt has been completely removed.

At this point it is then possible to take suitable action on the basis supplied by the apparatus according to the invention with respect to the characteristics of the washing solution.

It is thus possible to add further detergent to the washing solution, which would result, depending on the prevailing conditions, in an increase of the concentration of the emulsion or of the micelles.

Alternatively it would be possible toraise the temperature of the washing solution and/or to increase the mechanical agitation of the articles to be laundered.

The completion of the removal or absorption of dirt is recognizable when the apparatus according to the invention no longer shows an increase of the signal $I_{26}$ (solely proportional to the dirt) while indicating an increase of the signal $I_{25}$ (proportional to the micelles and to the dirt), with a corresponding increase of the ratio R. In a per se known manner microprocessor 27 is capable of recognizing this condition and of suitably controlling associated actuator means (not shown), for example the operative components of an automatic laundry washing machine the washing solution of which is circulated through chamber 10 (fig. 5).

The monitoring apparatus according to the invention may obviously be subjected to various modifications without thereby leaving the purview of the invention. The radiation produced by source 14 and processed by the apparatus may thus for example of a non-optical type, or the apparatus as a whole may use sensor means of a substantially capacitive type for detecting the microscopic characteristics of the micelles and of the emulsion, as described in the above mentioned co-pending patent application.

GRÜNECKER. KINKELDEY. STOCKMAIR & PARTNER

PATENTANWÄLTE
EUROPEAN PATENT ATTORNEYS

A GRUNECKER DPL ING
DR H. KINKELDEY. DPL ING
DR W STOCKMAIR. DPL ING AE E ICALTEC
DR K SCHUMANN. DPL PHYS
P. H JAKOB DPL ING.
DR G BEZOLD DPL CHEM
W MEISTER. DPL ING.
H HILGERS. DPL ING
DR H MEYER-PLATH. DPL ING
DR M BOTT-BODENHAUSEN DPL PHYS
DR U KINKELDEY. DPL BOL

LICENCIE EN DROIT DE L UNIV DE GENEVE

8000 MUNCHEN 22
MAXIMILIANSTRASSE 56

ZELTRON –
Istituto Zanussi per l'Elettronica S.p.A.
Via Principe di Udine 66
33030 Campoformido
Udine
I t a l y

EP 2724

Apparatus for Monitoring a Washing Solution
Containing Surfactants

Patent Claims

1.    Apparatus for monitoring a washing solution containing surfactants in the form of micelles and/or emulsion,
characterized by comprising sensing means (16, 19) for
sensing microscopic characteristics of said micelles (31)
and of said emulsion (33) in said solution and adapted to
generate signals (25, 26) corresponding to such characteristics.

2.    Monitoring apparatus according to claim 1, compris-
sing  a source of linearly polarized light to be propagated
through said washing solution and to be diffused by said
micelles and said emulsion, characterized in that said
sensing means comprise a first and a second photosensitive
element (16, 17) adapted to receive said diffused light through associated optical analyzers (18, 19) oriented with their respective polarization directions (22, 23) parallel and perpendicular, respectively, to the direction of polarization (21) of the light (15) emitted by said source (14).

3.      Monitoring apparatus according to claim 2, characterized in that said sensing means (16, 18 and 17, 19) and said source (14) of polarized light (15) are disposed behind respective transparent windows (11, 12, 13) of a chamber (10) containing at least part of said washing solution, said sensing means being disposed at lateral positions with respect to the direction of propagation of said polarized light (15).

4.      Monitoring apparatus according to claim 2, characterized in that said first ans second photosensitive elements (16, 17) by means of said signals (25, 26) control respective inputs of programmable means (27) adapted to establish the relationship ($R = I_{25}/I_{26}$).

FIG.1

FIG.2

FIG.3

FIG.4

FIG.5

FIG. 6

0193152